# FASCICULE DE BREVET EUROPEEN

(11) **EP 2 565 683 B1**
(45) Date de publication et mention de la délivrance du brevet: **20.11.2013**
(21) Numéro de dépôt: 12180062.7
(22) Date de dépôt: 10.08.2012
(51) Int. Cl.: G01V 3/10

(54) **Ensemble multicouche à double bobinage blindé pour détecteur inductif**
Mehrschichteneinheit mit abgeschirmter doppelter Wicklung für induktiven Sensor
Shielded double-coil multilayer assembly for inductive detector

(30) Priorité: 02.09.2011 FR 1157780
(43) Date de publication de la demande: 06.03.2013
(73) Titulaire: Schneider Electric Industries SAS, 92500 Rueil-Malmaison (FR)
(72) Inventeur: Bernard, Jacques, 16340 L'Isle d'Espagnac (FR); Charrier, Pierre-Marie, 16000 Angoulême (FR)
(74) Mandataire: Bié, Nicolas

(56) Documents cités:
- EP-A1- 2 017 652
- WO-A1-2011/030142
- US-A- 3 996 510
- US-A- 5 065 093
- US-A1- 2004 056 749

## Description

### Domaine technique de l'invention

La présente invention se rapporte à un ensemble multicouche destiné à être employé dans un détecteur inductif. Cet ensemble multicouche comporte notamment deux bobines distinctes.

### Etat de la technique

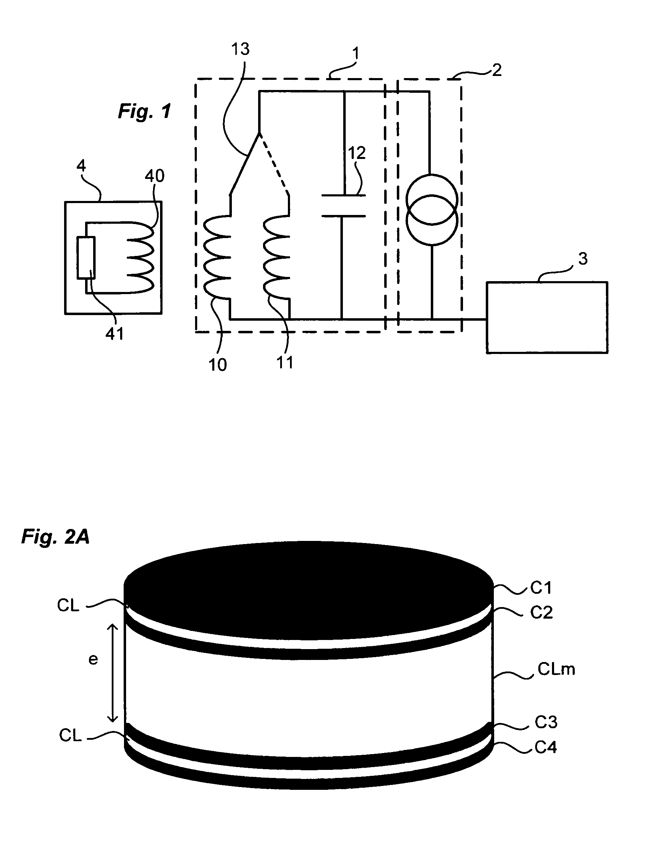

La demande de brevet EP2017652A1 décrit un détecteur de proximité inductif tel que représenté en figure 1. Il comporte un circuit oscillant 1 de type LC parallèle excité à résonance par exemple par un générateur de courant 2 apte à envoyer au circuit oscillant 1 un courant dont la fréquence doit s'accorder à la fréquence de résonance du circuit oscillant 1, et des moyens de traitement 3 permettant de fournir un signal de sortie binaire indiquant la présence ou l'absence d'une cible 4 métallique à proximité du détecteur. Sur la figure 1, la cible 4 est représentée sous la forme d'un circuit comportant une bobine 40 et une résistance 41. Le circuit oscillant 1 du détecteur comporte deux bobinages 10, 11 et un condensateur 12 commun pour les deux bobines ayant une capacité déterminée et monté en parallèle des deux bobinages 10, 11. Les deux bobinages sont fabriqués à partir de la même technologie et sont par exemple placés de manière coaxiale. Un premier bobinage est un bobinage de détection 10 qui est sensible à la proximité d'une cible 4 métallique lorsqu'il est connecté au circuit oscillant 1. Un second bobinage est un bobinage de référence 11 qui est faiblement sensible à la proximité de la cible 4. Autrement dit, le bobinage de référence 11 est agencé pour présenter une inductance mutuelle M sensiblement plus faible vis-à-vis de la cible 4 à détecter que celle du bobinage de détection vis-à-vis de cette même cible 4.

Les deux bobinages sont fabriqués à partir de la même technologie et sont par exemple réalisés chacun sous la forme d'un enroulement de fil de cuivre.

Dans la configuration du détecteur de proximité inductif décrit ci-dessus, trois inconvénients subsistent :
- la dérive en température et dans le temps de l'inductance propre de chaque bobinage,
- la dérive en température et dans le temps de la position relative des deux bobinages et de la position des bobinages par rapport à une éventuelle bague de noyabilité,
- la dérive de la portée due à la variation de la capacité parasite des deux bobinages.

Le but de l'invention est de proposer une solution aux trois inconvénients listés ci-dessus.

Ce but est atteint par un ensemble multicouche destiné à être employé dans un détecteur inductif, **caractérisé en ce qu'**il comporte au moins quatre couches parallèles superposées séparées qui sont les suivantes :
- une couche comportant un premier élément de blindage pour un premier bobinage,
- une couche comportant un premier bobinage,
- une couche comportant un deuxième bobinage,
- une couche comportant un premier élément de blindage pour le deuxième bobinage,
- lesdites couches étant séparées entre elles par des couches de liaison, l'une desdites couches de liaison, dite couche de liaison intermédiaire, présentant une épaisseur déterminée supérieure aux couches de liaison séparant les autres couches entre elles.

Selon une particularité, l'ensemble multicouche comporte une couche additionnelle comportant un deuxième élément de blindage du premier bobinage.

Selon une autre particularité, l'ensemble multicouche comporte une couche additionnelle comportant un deuxième élément de blindage du deuxième bobinage.

Selon une autre particularité, l'ensemble multicouche comporte une couche additionnelle comportant un bobinage connecté au premier bobinage.

Selon une autre particularité, l'ensemble multicouche comporte une couche additionnelle comportant un bobinage connecté au deuxième bobinage.

Selon une autre particularité, chaque bobinage est entouré d'un anneau ouvert de blindage.

Selon un premier mode de réalisation, l'ensemble multicouche de l'invention est formé par un circuit imprimé monobloc multicouche.

Selon un deuxième mode de réalisation, l'ensemble multicouche comporte un premier circuit imprimé multicouche, une entretoise formant la couche de liaison intermédiaire et un deuxième circuit imprimé multicouche assemblés entre eux.

L'invention concerne également un détecteur de proximité inductif comprenant un boîtier dans lequel est placé un circuit oscillant excité à résonance par un générateur et comprenant un bobinage de détection sensible à une cible métallique à détecter, le circuit oscillant comportant un bobinage de référence agencé de manière à présenter une inductance mutuelle vis-à-vis de la cible métallique à détecter sensiblement plus faible que celle du bobinage de détection vis-à-vis de la cible métallique, le détecteur comportant des moyens de traitement connectés aux bobinages permettant de déterminer la présence ou l'absence de la cible métallique à proximité du détecteur, le détecteur comportant dans son boîtier un ensemble multicouche tel que défini précédemment, le bobinage de détection étant réalisé dans la deuxième couche de l'ensemble multicouche et la bobine de référence étant formée dans la troisième couche de l'ensemble multicouche.

### Brève description des figures

D'autres caractéristiques et avantages vont apparaître dans la description détaillée qui suit faite en regard des dessins annexés sur lesquels :
- la figure 1 représente le schéma de principe d'un détecteur de proximité inductif de l'invention,
- les figures 2A, 2B et 2C représentent, vu en perspective, l'ensemble multicouche de l'invention, respectivement avec quatre couches conductrices, six couches conductrices ou huit couches conductrices,
- la figure 3 montre, vu en perspective, un exemple de réalisation de l'ensemble multicouche de l'invention,
- la figure 4 représente, vue en coupe, une couche de l'invention comportant un bobinage,
- la figure 5 représente, vue en coupe, une couche de l'invention comportant un élément de blindage.

### Description détaillée d'au moins un mode de réalisation

Dans la suite de la description et sur les dessins, il faut comprendre que chaque couche conductrice est séparée d'une autre par une couche de liaison en matériau synthétique et isolant. Ce matériau synthétique et isolant devra être stable dimensionnellement en température et dans le temps. Nous pourrons par exemple utiliser du FR4. Un circuit imprimé multicouche comportera donc des couches sur plusieurs niveaux parallèles comportant chacune des pistes électriques, chaque couche étant séparée d'une autre par une couche de liaison.

L'invention concerne un ensemble multicouche destiné à être employé dans un détecteur inductif tel que décrit ci-dessus en liaison avec la figure 1.

L'ensemble multicouche de l'invention permet de pallier les inconvénients précités car il permet de conserver :
- une stabilité dimensionnelle de chaque bobinage,
- une distance stable entre les deux bobinages,
- une stabilité de la position des deux bobinages par rapport à la bague de noyabilité.

De plus il permet de :
- réduire la sensibilité capacitive de chaque bobinage et ainsi finalement de réduire la sensibilité capacitive du détecteur inductif,
- éviter toute variation de portée du détecteur liée à des dérives de la permittivité relative des matériaux environnants.

Selon l'invention, l'ensemble multicouche de l'invention se présente par exemple sous la forme d'un cylindre, par exemple de section adaptée à la forme du détecteur (sur les figures la section est circulaire) et comporte au minimum quatre couches parallèles superposées, c'est-à-dire deux couches de bobinage et deux couches externes comportant chacune un élément de blindage.

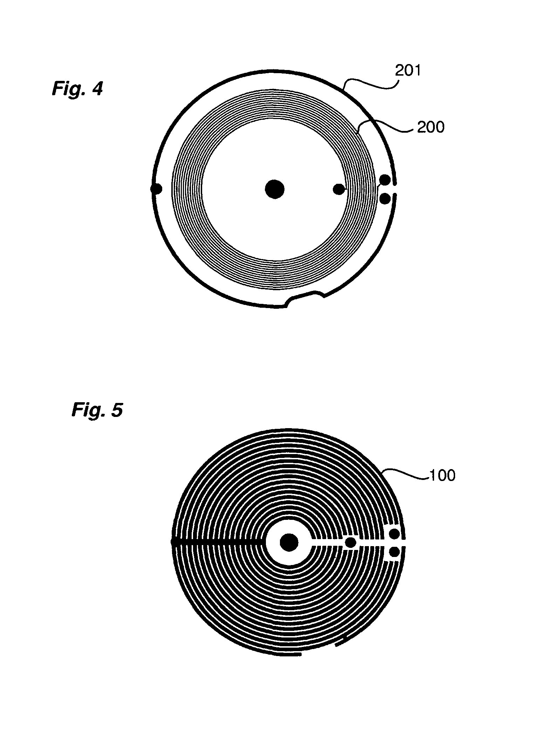

Comme représenté sur la figure 4, chaque bobinage est agencé sous la forme d'une piste électrique 200 réalisée en forme de spirale et dans un matériau conducteur, comme par exemple le cuivre. Il comporte deux points de connexion à chaque extrémité de la spirale.

Avantageusement, chaque couche dotée d'un bobinage peut comporter un anneau ouvert de blindage 201 entourant le bobinage pour le prémunir des effets capacitifs sur les côtés. Cet anneau de blindage est représenté sur la figure 4.

Comme représenté sur la figure 5, chaque élément de blindage est réalisé par exemple sous la forme de plusieurs pistes électriques 100 concentriques interrompues. La surface occupée par chaque élément de blindage dans les couches concernées est préférentiellement supérieure à la surface occupée par chaque bobinage dans les couches concernées.

En référence à la figure 2A, l'ensemble multicouche de l'invention à quatre couches présente la structure suivante :
- une première couche C1 comportant le premier élément de blindage du premier bobinage,
- une deuxième couche C2 comportant le premier bobinage et éventuellement un anneau ouvert de blindage autour de ce premier bobinage,
- une troisième couche C3 comportant le deuxième bobinage et éventuellement un anneau ouvert de blindage autour de ce deuxième bobinage,
- une quatrième couche C4 comportant le deuxième élément de blindage de ce deuxième bobinage.

Comme décrit ci-dessus, chacune des couches est séparée d'une autre par une couche de liaison. Selon l'invention, la couche de liaison, dite couche de liaison intermédiaire CLm, séparant la deuxième couche C2 de la troisième couche C3 présente préférentiellement une épaisseur (e) plus importante que les plaques séparant les autres couches. L'épaisseur (e) de cette couche de liaison intermédiaire CLm détermine ainsi la distance séparant les deux bobinages.

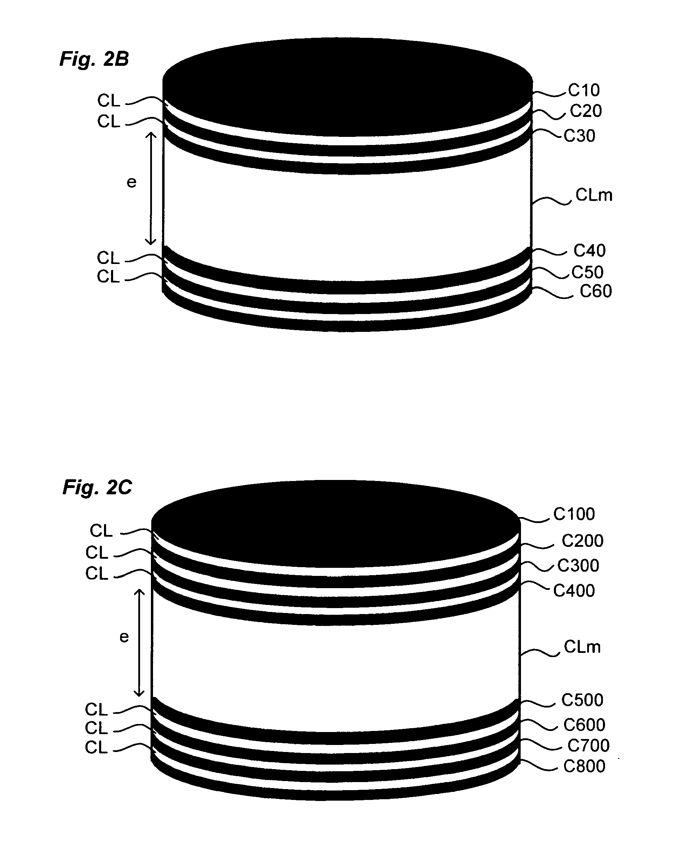

Pour plus d'efficacité, l'ensemble multicouche peut comporter une ou deux couches de blindage internes supplémentaires formant alors un ensemble à cinq ou six couches. Comme représenté sur la figure 2B, un ensemble à six couches comporte la structure suivante :
- une première couche C10 comportant un premier élément de blindage du premier bobinage,
- une deuxième couche C20 comportant le premier bobinage et éventuellement un anneau ouvert de blindage autour de ce premier bobinage,
- une troisième couche C30 comportant un deuxième élément de blindage de ce premier bobinage,
- une quatrième couche C40 comportant un premier élément de blindage du deuxième bobinage,
- une cinquième couche C50 comportant le deuxième bobinage et éventuellement un anneau ouvert de blindage autour de ce deuxième bobinage,
- une sixième couche C60 comportant un deuxième élément de blindage du deuxième bobinage.

Comme pour la réalisation à quatre couches, la couche de liaison intermédiaire CLm, séparant la troisième couche C30 de la quatrième couche C40, présente préférentiellement une épaisseur (e) plus importante que les plaques séparant les autres couches. L'épaisseur (e) de cette couche de liaison intermédiaire CLm détermine ainsi la distance séparant les deux bobinages.

Avantageusement, chaque bobinage peut aussi se répartir sur deux couches plutôt que sur une seule, permettant ainsi d'augmenter le coefficient de qualité des bobinages. Pour chaque bobinage, l'ensemble multicouche de l'invention peut ainsi comporter une couche additionnelle, soit au total au moins sept ou huit couches. Comme représentée sur la figure 2C, un ensemble à huit couches comporte la structure suivante :
- une première couche C100 comportant un premier élément de blindage du premier bobinage,
- une deuxième couche C200 comportant une première partie du premier bobinage et éventuellement un anneau ouvert de blindage autour de cette première partie du premier bobinage,
- une troisième couche C300 comportant une deuxième partie du premier bobinage et éventuellement un anneau ouvert de blindage autour de cette deuxième partie du premier bobinage,
- une quatrième couche C400 comportant un deuxième élément de blindage du premier bobinage,
- une cinquième couche C500 comportant un premier élément de blindage du deuxième bobinage,
- une sixième couche C600 comportant une première partie du deuxième bobinage et éventuellement un anneau ouvert de blindage autour de cette première partie du deuxième bobinage,
- une septième couche C700 comportant une deuxième partie du deuxième bobinage et éventuellement un anneau ouvert de blindage autour de cette deuxième partie du deuxième bobinage,
- une huitième couche C800 comportant un deuxième élément de blindage du deuxième bobinage.

Comme pour les réalisations précédentes, la couche de liaison intermédiaire CLm, séparant la quatrième couche C400 de la cinquième couche C500, présente préférentiellement une épaisseur (e) plus importante que les plaques séparant les autres couches. L'épaisseur (e) de cette couche de liaison intermédiaire CLm détermine ainsi la distance séparant les deux bobinages.

Dans les variantes à six ou huit couches, le premier bobinage est ainsi prémuni contre les effets capacitifs par son premier élément de blindage, par son deuxième élément de blindage et éventuellement par son anneau ouvert de blindage, et le deuxième bobinage est prémuni contre les effets capacitifs par son premier élément de blindage, par son deuxième élément de blindage et éventuellement par son anneau ouvert de blindage.

L'ensemble multicouche de l'invention peut se présenter sous la forme d'un circuit imprimé monobloc multicouche tel que représenté sur les figures 2A à 2C.

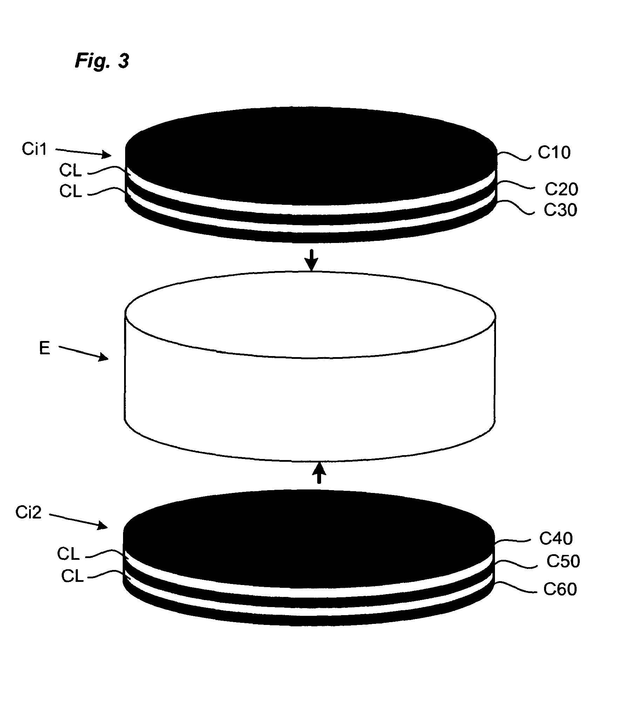

Dans un exemple de réalisation représenté sur la figure 3, l'ensemble multicouche de l'invention peut comporter plusieurs éléments distincts destinés à être assemblés entre eux. Ces éléments sont constitués d'un premier circuit imprimé Ci1 multicouche et d'un deuxième circuit imprimé Ci2 multicouche et destinés à être assemblés de part et d'autre d'une entretoise E réalisée dans un matériau synthétique, ladite entretoise E formant la couche de liaison intermédiaire CLm de l'ensemble. Sur la figure 3, l'ensemble présenté est à six couches mais il faut comprendre qu'il peut en comporter quatre, huit ou plus selon la structure adoptée.

Chaque circuit imprimé comporte ainsi deux, trois ou quatre couches (ou plus) selon la structure que l'on souhaite employer. L'entretoise E et chaque circuit imprimé Cil, Ci2 comportent par exemple des moyens complémentaires d'assemblage pour se fixer l'un à l'autre. Une fois assemblé, l'ensemble multicouche est semblable à celui représenté sur l'une des figures 2A à 2C. L'épaisseur de l'entretoise E formant la couche de liaison intermédiaire permet de déterminer la distance séparant les deux bobinages.

Selon l'invention, le premier bobinage est employé pour former le bobinage de détection 10 d'un détecteur inductif tel que décrit ci-dessus en liaison avec la figure 1. Le deuxième bobinage est alors employé pour former le bobinage de référence 11 du détecteur inductif.

L'ensemble multicouche de l'invention est destiné à se loger directement dans le boîtier du détecteur et chaque bobinage est ensuite connecté comme décrit ci-dessus en liaison avec la figure 1.

## Revendications

1. Ensemble multicouche destiné à être employé dans un détecteur inductif, **caractérisé en ce qu'**il comporte au moins quatre couches parallèles superposées séparées qui sont les suivantes :
- une couche (C1, C10, C100) comportant un premier élément de blindage pour un premier bobinage,
- une couche (C2, C20, C200) comportant un premier bobinage,
- une couche (C3, C50, C600) comportant un deuxième bobinage,
- une couche (C4, C60, C800) comportant un premier élément de blindage pour le deuxième bobinage,
- et **en ce que** lesdites couches sont séparées entre elles par des couches de liaison (CL), l'une desdites couches de liaison, dite couche de liaison intermédiaire (CLm), présentant une épaisseur (e) déterminée supérieure aux couches de liaison (CL) séparant les autres couches entre elles.

2. Ensemble multicouche selon la revendication 1, **caractérisé en ce qu'**il comporte une couche (C30, C400) additionnelle comportant un deuxième élément de blindage du premier bobinage.

3. Ensemble multicouche selon la revendication 1 ou 2, **caractérisé en ce qu'**il comporte une couche (C40, C500) additionnelle comportant un deuxième élément de blindage du deuxième bobinage.

4. Ensemble multicouche selon l'une des revendications 1 à 3, **caractérisé en ce qu'**il comporte une couche (C300) additionnelle comportant un bobinage connecté au premier bobinage.

5. Ensemble multicouche selon l'une des revendications 1 à 4, **caractérisé en ce qu'**il comporte une couche (C700) additionnelle comportant un bobinage connecté au deuxième bobinage.

6. Ensemble multicouche selon l'une des revendications 1 à 5, **caractérisé en ce que** chaque bobinage est entouré d'un anneau ouvert de blindage.

7. Ensemble multicouche selon l'une des revendications 1 à 6, **caractérisé en ce qu'**il est formé par un circuit imprimé monobloc multicouche.

8. Ensemble multicouche selon l'une des revendications 1 à 6, **caractérisé en ce qu'**il comporte un premier circuit imprimé (Ci1) multicouche, une entretoise (E) formant la couche de liaison intermédiaire (CLm) et un deuxième circuit imprimé (Ci2) multicouche assemblés entre eux.

9. Détecteur de proximité inductif comprenant un boîtier dans lequel est placé un circuit oscillant (1) excité à résonance par un générateur (2) et comprenant un bobinage de détection (10) sensible à une cible (4) métallique à détecter, le circuit oscillant (1) comportant un bobinage de référence (11) agencé de manière à présenter une inductance mutuelle vis-à-vis de la cible (4) métallique à détecter sensiblement plus faible que celle du bobinage de détection (10) vis-à-vis de la cible (4) métallique, le détecteur comportant des moyens de traitement (3) connectés aux bobinages (10, 11) permettant de déterminer la présence ou l'absence de la cible (4) métallique à proximité du détecteur, **caractérisé en ce qu'**il comporte dans son boîtier un ensemble multicouche tel que défini dans l'une des revendications précédentes et **en ce que** le bobinage de détection (10) est réalisé dans la deuxième couche de l'ensemble multicouche et la bobine de référence est formée dans la troisième couche de l'ensemble multicouche.

## Patentansprüche

1. Mehrschichtige Einheit, die dazu bestimmt ist, in einem induktiven Sensor verwendet zu werden, **dadurch gekennzeichnet, dass** sie mindestens vier getrennte übereinander liegende parallele Schichten wie folgt aufweist:
- eine Schicht (C1, C10, C100), die ein erstes Abschirmelement für eine erste Wicklung aufweist,
- eine Schicht (C2, C20, C200), die eine erste Wicklung aufweist,
- eine Schicht (C3, C50, C600), die eine zweite Wicklung aufweist,
- eine Schicht (C4, C60, C800), die ein erstes Abschirmelement für die zweite Wicklung aufweist,
- und dass die Schichten durch Verbindungsschichten (CL) voneinander getrennt sind, wobei eine der Verbindungsschichten, Zwischenverbindungsschicht (CLm) genannt, eine bestimmte Dicke (e) größer als die die anderen Schichten voneinander trennenden Verbindungsschichten (CL) hat.

2. Mehrschichtige Einheit nach Anspruch 1, **dadurch gekennzeichnet, dass** sie eine zusätzliche Schicht (C30, C400) aufweist, die ein zweites Abschirmelement der ersten Wicklung aufweist.

3. Mehrschichtige Einheit nach Anspruch 1 oder 2, **dadurch gekennzeichnet, dass** sie eine zusätzliche Schicht (C40, C500) aufweist, die ein zweites Abschirmelement der zweiten Wicklung aufweist.

4. Mehrschichtige Einheit nach einem der Ansprüche 1 bis 3, **dadurch gekennzeichnet, dass** sie eine zusätzliche Schicht (C300) aufweist, die eine mit der ersten Wicklung verbundene Wicklung aufweist.

5. Mehrschichtige Einheit nach einem der Ansprüche 1 bis 4, **dadurch gekennzeichnet, dass** sie eine zusätzliche Schicht (C700) aufweist, die eine mit der zweiten Wicklung verbundene Wicklung aufweist.

6. Mehrschichtige Einheit nach einem der Ansprüche 1 bis 5, **dadurch gekennzeichnet, dass** jede Wicklung von einem offenen Abschirmring umgeben ist.

7. Mehrschichtige Einheit nach einem der Ansprüche 1 bis 6, **dadurch gekennzeichnet, dass** sie aus einer mehrschichtigen einteiligen Leiterplatte geformt ist.

8. Mehrschichtige Einheit nach einem der Ansprüche 1 bis 6, **dadurch gekennzeichnet, dass** sie eine erste mehrschichtige Leiterplatte (Ci1), einen die Zwischenverbindungsschicht (CLm) bildenden Abstandshalter (E) und eine zweite mehrschichtige Leiterplatte (Ci2) aufweist, die zusammengebaut sind.

9. Induktiver Näherungssensor, der ein Gehäuse enthält, in dem ein Schwingkreis (1) angeordnet ist, der von einem Generator (2) resonanzerregt wird, und eine Sensorwicklung (10) enthält, die auf ein zu erfassendes metallisches Zielobjekt (4) anspricht, wobei der Schwingkreis (1) eine Bezugswicklung (11) enthält, die so gestaltet ist, dass sie eine Gegeninduktivität gegenüber dem zu erfassenden metallischen Zielobjekt (4) hat, die wesentlich schwächer ist als diejenige der Sensorwicklung (10) gegenüber dem metallischen Zielobjekt (4), wobei der Sensor mit den Wicklungen (10, 11) verbundene Verarbeitungseinrichtungen (3) aufweist, die es ermöglichen, das Vorhandensein oder die Abwesenheit des metallischen Zielobjekts (4) in der Nähe des Sensors festzustellen, **dadurch gekennzeichnet, dass** er in seinem Gehäuse eine mehrschichtige Einheit aufweist, wie sie in einem der vorhergehenden Ansprüche definiert ist, und dass die Sensorwicklung (10) in der zweiten Schicht der mehrschichtigen Einheit realisiert ist, und die Bezugsspule in der dritten Schicht der mehrschichtigen Einheit ausgebildet ist.

## Claims

1. Multilayer assembly intended to be used in an inductive detector, **characterized in that** it comprises at least four stacked parallel separated layers, namely:
- a layer (C1, C10, C100) comprising a first shielding element for a first coil,
- a layer (C2, C20, C200) comprising a first coil,
- a layer (C3, C50, C600) comprising a second coil,
- a layer (C4, C60, C800) comprising a first shielding element for the second coil,
- and **in that** said layers are separated from one another by connecting layers (CL), one of said connecting layers, referred to as an intermediate connecting layer (CLm), having a determined thickness (e) greater than those of the connecting layers (CL) separating the other layers from one another.

2. Multilayer assembly according to Claim 1, **characterized in that** it comprises an additional layer (C30, C400) comprising a second element for shielding the first coil.

3. Multilayer assembly according to Claim 1 or 2, **characterized in that** it comprises an additional layer (C40, C500) comprising a second element for shielding the second coil.

4. Multilayer assembly according to one of Claims 1 to 3, **characterized in that** it comprises an additional layer (C300) comprising a coil connected to the first coil.

5. Multilayer assembly according to one of Claims 1 to 4, **characterized in that** it comprises an additional layer (C700) comprising a coil connected to the second coil.

6. Multilayer assembly according to one of Claims 1 to 5, **characterized in that** each coil is surrounded by an open shielding ring.

7. Multilayer assembly according to one of Claims 1 to 6, **characterized in that** it is formed by a monobloc multilayer printed circuit.

8. Multilayer assembly according to one of Claims 1 to 6, **characterized in that** it comprises a first multilayer printed circuit (Ci1), a spacer strip (E) forming the intermediate connecting layer (CLm) and a second multilayer printed circuit (Ci2), which are assembled together.

9. Inductive proximity detector comprising a casing in which an oscillating circuit (1) is placed which is excited in resonance by a generator (2) and comprising a detection coil (10) sensitive to a metal target (4) to be detected, the oscillating circuit (1) comprising a reference coil (11) arranged in order to have a mutual inductance, with respect to the metal target (4) to be detected, which is substantially less than that of the detection coil (10) with respect to the metal target (4), the detector comprising processing means (3) connected to the coils (10, 11) and making it possible to determine the presence or absence of the metal target (4) in proximity to the detector, **characterized in that** it comprises a multilayer assembly as defined in one of the preceding claims in its casing, and **in that** the detection coil (10) is produced in the second layer of the multilayer assembly and the reference coil is formed in the third layer of the multilayer assembly.
